# EUROPÄISCHE PATENTANMELDUNG

(11) **EP 2 412 692 A2**
(43) Veröffentlichungstag der Anmeldung: **01.02.2012**
(21) Anmeldenummer: 11175856.1
(22) Anmeldetag: 28.07.2011
(51) Int. Cl.: C04B 35/52, C04B 35/622, C04B 35/80, C04B 35/626, F16D 69/02

(54) **Verfahren zum Herstellen einer faserbasierten Materialzusammensetzung, faserbasierten Materialzusammensetzung und faserbasierten Werkstück**

(30) Priorität: 28.07.2010 DE 102010038586
(71) Anmelder: Brembo SGL Carbon Ceramic Brakes GmbH, 86405 Meitingen (DE)
(72) Erfinder: Kienzle, Andreas, 86753 Möttingenot Balgheim (DE); Krätschmer, Ingrid, 86485 Biberbach (DE)
(74) Vertreter: Deckers, Hellmuth Alexander

(57) **Zusammenfassung**

Die vorliegende Erfindung betrifft ein Verfahren zum Herstellen einer faserbasierten Materialzusammensetzung (1) zum Verpressen oder eines daraus hergestellten Vorkörpers (1'), wobei aus einem oder mehreren Fasermaterialien (10), einem oder mehreren Bindermaterialien (20) und/oder insbesondere einem oder mehreren Zusatzmaterialien (30) durch Einbringen und Mischen miteinander eine feuchte Mischung (100) ausgebildet und dann durch teilweises oder vollständiges Entfeuchten in eine teilweise oder vollständig entfeuchtete oder getrocknete Mischung (110) als Materialzusammensetzung (1) zum Verpressen oder als ein daraus hergestellter Vorkörper (1') ausgebildet wird.

## Beschreibung

### GEBIET DER ERFINDUNG

Die vorliegende Erfindung betrifft ein Verfahren zum Herstellen einer Materialzusammensetzung, eine Materialzusammensetzung selbst sowie ein Werkstück, insbesondere hergestellt unter Verwendung der erfindungsgemäßen Materialzusammensetzung. Die Erfindung betrifft insbesondere auch eine so genannte getrocknete Nassmasse für C/SiC-Materialien und deren Verwendung als Pressmasse zur Herstellung eines Werkstücks oder Werkzeugs, insbesondere einer Bremsscheibe oder eines Teils davon.

### HINTERGRUND DER ERFINDUNG

Bei der Herstellung von Werkstücken und Werkzeugen werden häufig faserbasierte Materialien verwendet und im Rahmen eines Pressverfahrens verarbeitet, wobei das Verpressen einerseits der Formgebung oder -bildung, andererseits aber auch der Modifikation der Materialeigenschaften zum Beispiel auf Grund von Verdichtung selbst dient.

Häufig besitzen dabei die zu Grunde liegenden Materialzusammensetzungen einen gewissen Grad oder Anteil an Feuchtigkeit, verursacht durch eine oder mehrere wässrige Komponenten, einen Anteil an einem oder mehreren organischen Lösungsmitteln und/oder einen Anteil einer oder mehrerer anderer fluider, pastöser und/oder gelartiger Komponenten.

Aufgrund dieses Feuchtigkeitsanteils oder -grads erweist sich häufig das Portionieren und/oder das Befüllen entsprechender Pressformen als schwierig und mithin als aufwendig an Zeit und Personal, da mit dem Grad an Feuchtigkeit die zu Grunde liegende Materialzusammensetzung inhärent eine gewisse Klebrigkeit besitzt, die eine Handhabung schwierig gestaltet und/oder zum Verschmutzen der Pressformen einerseits, aber auch gerade der Befüllwerkzeuge andererseits führt.

### ZUSAMMENFASSUNG DER ERFINDUNG

Der Erfindung liegt die Aufgabe zu Grunde, ein Verfahren zum Herstellen einer faserbasierten Materialzusammensetzung zum Verpressen oder eines daraus hergestellten Vorkörpers, der noch in weiteren Verfahrensschritten bearbeitet wird, sowie eine faserbasierte Materialzusammensetzung selbst oder eines daraus hergestellten Vorkörpers anzugeben, bei welchen auf besonders einfache und doch zuverlässige Art und Weise bei geringem Zeit- und Arbeitsaufwand sich eine leichte Handhabbarkeit und Portionierbarkeit unter weitestgehender Vermeidung von Kontamination von Umgebung und Werkzeugen einstellt.

Die der Erfindung zu Grunde liegenden Aufgaben werden bei einem Verfahren zum Herstellen einer faserbasierten Materialzusammensetzung zum Verpressen oder eines daraus hergestellten Vorkörpers erfindungsgemäß mit den Merkmalen des unabhängigen Patentanspruchs 1, bei einer Materialzusammensetzung erfindungsgemäß mit den Merkmalen des unabhängigen Patentanspruchs 11 sowie bei einem Werkstück erfindungsgemäß mit den Merkmalen des unabhängigen Patentanspruchs 12 gelöst. Vorteilhafte Weiterbildungen sind in den abhängigen Ansprüchen definiert.

Gemäß einem ersten Aspekt der vorliegenden Erfindung wird ein Verfahren zum Herstellen einer faserbasierten Materialzusammensetzung zum Verpressen oder eines daraus hergestellten Vorkörpers geschaffen, und zwar mit den Schritten (S1) Bereitstellen eines oder mehrerer Fasermaterialien mit oder aus Fasern oder Abschnitten von Fasern, eines oder mehrerer Bindermaterialien und/oder insbesondere eines oder mehrerer Zusatzmaterialien, wobei das oder die Bindermaterialien und/oder das oder die Zusatzmaterialien einen Feuchtigkeitsanteil in Form einer flüssigen, pastösen und/oder gelartigen Komponente aufweisen, (S2) Mischen des oder der Fasermaterialien, des oder der Bindermaterialien und insbesondere des oder der Zusatzmaterialien miteinander und Erhalten einer einen Feuchtigkeitsanteil enthaltenden feuchten Mischung und (S3) teilweises oder vollständiges Entfeuchten der feuchten Mischung und dadurch Erhalten einer teilweise oder vollständig entfeuchteten oder getrockneten Mischung als die Materialzusammensetzung zum Verpressen oder als eines daraus hergestellten Vorkörpers. Es ist somit ein Kernaspekt der vorliegenden Erfindung, die der erfindungsgemäßen faserbasierten Materialzusammensetzung zu Grunde liegenden feuchten Mischung oder Masse oder Nassmasse einem Vorgang des teilweisen oder vollständigen Entfeuchtens zu unterziehen, um dadurch eine teilweise oder vollständig entfeuchtete oder getrocknete Mischung, Masse oder Nassmasse zu erhalten, die dann als die erfindungsgemäße Materialzusammensetzung zum Verpressen oder als ein daraus hergestellter Vorkörper fungiert. Wichtig ist dabei, dass tatsächlich eine feuchte Mischung oder Nassmasse Ursprung der Materialzusammensetzung gemäß der vorliegenden Erfindung ist, weil nur durch das Vorhandensein einer ursprünglichen Feuchtigkeit und durch deren Reduktion oder vollständige Entfernung einerseits die Homogenität der faserbasierten Materialzusammensetzung oder eines daraus hergestellten Vorkörpers gewährleistet werden kann und andererseits eine Kontamination oder ein Verbleiben von Stäuben bei der faserbasierten Materialzusammensetzung reduziert oder vermieden wird. Einerseits wird also eine Handhabbarkeit durch die Reduktion des Feuchtegrades oder Feuchtigkeitsanteils erreicht, andererseits wird im Gegensatz zu trocken hergestellten Gemischen der Staubanteil deutlich reduziert oder gar verhindert.

Der Schritt (S3) des teilweisen oder vollständigen Entfeuchtens kann einen Schritt des Erwärmens umfassen, insbesondere mittels Wärmestrahlung und/oder mittels Konvektion, insbesondere mittels eines Stroms erwärmter Luft und/oder eines erwärmten Gases, vorzugsweise eines erwärmten Inertgases. Grundsätzlich sind sämtliche Wärmeübertragungsmechanismen zum Entfeuchten der feuchten Mischung und zum Erhalten der teilweise oder vollständig getrockneten Mischung einsetzbar. Jedoch sind der Einsatz von Wärmestrahlung und/oder von Wärmeströmung oder Konvektion, zum Beispiel in Zusammenhang mit Trocknungsgasen, vorzugsweise in inerter Form, besonders geeignet.

Alternativ oder zusätzlich kann der Schritt (S3) des teilweisen oder vollständigen Entfeuchtens einen Schritt aufweisen, bei dem der Umgebungsdruck abgesenkt wird, der auch als Evakuieren bezeichnet wird, vorzugsweise unterhalb eines Enddrucks von etwa 1 hPa. Durch das Absenken des Umgebungsdrucks wird die Siedetemperatur des die Feuchtigkeit bildenden Materials oder der die Feuchtigkeit bildenden Materialien abgesenkt, so dass ein geringere Aufheizung ausreichend ist, um die Entfeuchtung zu realisieren.

Die feuchte Mischung kann vor dem und/oder während des teilweisen oder vollständigen Entfeuchtens (S3) zerkleinert werden. Um eine besonders zuverlässige Entfeuchtung im Volumen der feuchten Mischung zu erzielen, wird durch das Zerkleinern eine besonders hohe Angriffsfläche für den Wärmeübergang und für das Abdampfen oder Verdunsten der die Feuchtigkeit bildenden Materialien gewährleistet. Dieser Effekt kann auch erreicht werden, wenn während des teilweisen oder vollständigen Trocknens die bereits vorgelegte feuchte Masse noch zerkleinert wird. Ein Zerkleinern nach dem teilweisen oder vollständigen Entfeuchten bietet sich zum Beispiel dann an, wenn die erfindungsgemäß hergestellte Materialzusammensetzung nicht gleich einer Endverarbeitung zugeführt wird, sondern sich ein Zwischenlagerungsprozess anschließt.

Es kann also auch alternativ oder zusätzlich die getrocknete Mischung zerkleinert werden, insbesondere durch Granulieren und/oder zu einer mittleren Korngröße hin im Bereich von etwa 0,5 mm bis etwa 10 mm, vorzugsweise im Bereich von etwa 2 mm bis etwa 4 mm. Ein Granulat ist besonders geeignet, in einfacher Art und Weise zwischengelagert und/oder bei der Weiter- oder Endverarbeitung geeignet portioniert zu werden, wobei die Korngröße oder Korngrößenverteilung des Granulats entsprechend der jeweiligen Zielanwendung gewählt und eingestellt werden kann, jedoch die Körner im Mittel bereits die Eigenschaften der eigentlichen erfindungsgemäßen Materialzusammensetzung tragen, d.h. in sich homogen und kornweise vollständig durchmischt sind.

Das oder die Fasermaterialien können mit oder aus Kohlenstofffasern, Glasfasern, Aramidfasern und/oder deren Abschnitten oder Kombinationen gebildet sein oder werden, insbesondere durch Mahlen und/oder Schneiden mit einer Faserlänge oder einer Faserabschnittslänge im Bereich von etwa 0,1 mm bis etwa 20 mm.

Das oder die Bindermaterialien können mit oder aus einem oder mehreren Harzmaterialien, insbesondere einem Nassharz, einem Harz auf Wasserbasis und/oder Basis eines organischen Lösungsmittels, ein Harzpulver, organischen Harzen, organischen Harzmaterialien, organischen Bindern, Polysilazanen, Polysilanen, Polycarbosilanen, Polysiloxanen, Kombinationen und Mischungen dieser Polymere, Kombinationen und Mischungen dieser Polymere mit organischen Harzen, organischen Harzmaterialien und organischen Bindern oder einer Kombination davon ausgebildet sein oder werden. Günstig ist die Wahl eines Bindermaterials, das in einem Carbonisierungsschritt eine hohe Kohlenstoffausbeute aufweist. Unter den Harzen werden insbesondere Phenolharze bevorzugt, unter den organischen Bindermaterialien insbesondere Peche.

Das oder die Zusatzmaterialien können ein oder mehrere Füllstoffe, insbesondere ein Siliciumcarbidmaterial, ein C/SiC-Material (mit Fasern aus Kohlenstoff verstärkte Siliciumcarbidkeramik) und/oder Feuchtigkeitsanteile liefernde Zusätze, insbesondere Wasser und/oder organische Lösungsmittel, oder deren Kombinationen enthalten.

Die feuchte oder die getrocknete Mischung können durch geeignete Weiterverarbeitungsschritte nach Art eines C/SiC-Materials, nach Art eines CFK-Materials (mit Fasern aus Kohlenstoff verstärkte Kunstoff- oder Kunstharz-Materialien) und/oder nach Art eines CFC-Materials (mit Fasern aus Kohlenstoff verstärkte Kohlenstoff- oder Graphit-Materialien) ausgebildet sein oder werden. Ein CFK-Material wird bei Verwendung eines synthetischen Harzes, zum Beispiel eines Phenolharzes, als Bindemittel durch Formgebung und Härten (chemische Vernetzung) erhalten; ein CFC-Material wird bevorzugt aus einem geformten CFK-Material durch Carbonisieren erzeugt, indem das CFK-Material bevorzugt unter Ausschluss von oxydierenden Agenzien wie Sauerstoff oder Luft auf Temperaturen von 750 °C bis 1300 °C erhitzt wird. Durch den dabei auftretenden Materialschwund erhält man zumeist einen porösen Körper, dessen Matrix vornehmlich Kohlenstoff enthält und Poren aufweist; derartige poröse CFC-Körper können dann durch Infiltrieren mit Schmelzen oder Gasen carbidbildender Elemente zumindest teilweise zu den entsprechenden Carbiden umgesetzt werden, im Fall der Infiltration eines CFC-Körpers mit flüssigem oder gasförmigem Silicium also zu einem C/SiC-Material. Insbesondere enthält die feuchte oder getrocknete Mischung jedoch Verstärkungsfasern, insbesondere aus Kohlenstoff oder anderen Materialien mit hoher Erweichungstemperatur bevorzugt über 280 °C und hoher Zugfestigkeit von bevorzugt über 1 GPa. Geeignete andere Materialien sind Glasfasern, insbesondere Siliciumoxid-basierende Fasern mit hohem Aluminiumgehalt, Aramidfasern sowie Fasern basierend auf Zirkonoxid, Bor, Silciumnitrid, Siliciumcarbid, und Siliciumcarbonitrid, die oben erläuterten Bindemittel sowie gegebenenfalls Füllstoffe, wobei außer den oben erwähnten auch Carbid-, Nitrid- und Oxid-Pulver wie Siliciumcarbid, Siliciumnitrid, Borcarbid, Zirkonoxid und Magnesiumoxid geeignet sind.

Unter "Vorkörper" wird hier ein durch einen Bearbeitungsschritt, vor allem durch Pressen oder auch ein sonstiges Formgebungsverfahren hergestelltes Werkstück verstanden, das danach mindestens einem weiteren Verfahrensschritt unterworfen wird. Diese weiteren Verfahrensschritte können mechanischer Art (beispielsweise spanende Bearbeitung wie Drehen, Fräsen; sowie Entgraten, Schleifen und Honen) oder physikalisch-chemischer Art (chemisches Vernetzen, Härten, Carbonisieren, Graphitieren, Rekristallisieren) sein.

Grundsätzlich sind sämtliche Materialkombinationen für die Fasermaterialien, die Bindermaterialien und die Zusatzmaterialien denkbar, solange ein gewisser Feuchtigkeitsgrad erhalten bleibt, so dass nach Durchmischung der Ausgangsmaterialien tatsächlich eine feuchte Mischung entsteht, wobei die Feuchtigkeit einerseits die Homogenität der Verteilung der Komponenten, andererseits aber auch eine weitestgehende Vermeidung des Auftretens von Stäuben gewährleistet.

Die getrocknete Mischung kann - insbesondere in granulierter Form - in eine Pressform eingefüllt und unter Druck zu einem Werkzeug oder Werkstück oder zu einem Vorkörper dafür verpresst werden.

Gemäß einem anderen Aspekt der vorliegenden Erfindung werden eine faserbasierte Materialzusammensetzung oder ein daraus hergestellter Vorkörper geschaffen, welcher nach einem erfindungsgemäßen Herstellungsverfahren hergestellt ist oder wurde.

Gemäß einem weiteren Aspekt der vorliegenden Erfindung wird ein Werkstück oder Werkzeug geschaffen, welches auf der erfindungsgemäßen Materialzusammensetzung und/oder auf einer nach dem erfindungsgemäßen Herstellungsverfahren hergestellten Materialzusammensetzung basiert.

Das Werkstück kann zum Beispiel als Bremsscheibe für ein Fahrzeug oder eine Maschine mit einem oder mehreren um eine Achse rotierenden Teilen ausgebildet sein. In vorteilhafter Weise sind die erfindungsgemäße Materialzusammensetzung und das erfindungsgemäße Herstellungsverfahren bei der Herstellung von Bremsscheiben geeignet.

Diese und weitere Aspekte werden beispielhaft auf der Grundlage der beigefügten schematischen Zeichnungen erläutert.

### KURZBESCHREIBUNG DER FIGUREN

- Fig. 1: ist ein Flussdiagramm, welches schematisch eine Ausführungsform des erfindungsgemäßen Verfahrens zum Herstellen einer faserbasierten Materialzusammensetzung zeigt.
- Fig. 2: zeigt nach Art eines Teilflussdiagramms schematisch mögliche Teilschritte zum Bereitstellen des Fasermaterials.
- Fig. 3: zeigt nach Art eines Teilflussdiagramms schematisch mögliche Teilschritte zum teilweisen oder vollständigen Entfeuchten der feuchten Mischung.
- Fig. 4: zeigt nach Art eines Teilflussdiagramms schematisch mögliche Details eines optionalen Zwischenverarbeitungsschritts.
- Fig. 5: zeigt nach Art eines Teilflussdiagramms schematisch mögliche Details in Bezug auf den Schritt des Verarbeitens.
- Fig. 6: zeigt nach Art eines Teilflussdiagramms schematisch mögliche Details eines Weiterverarbeitungsschritts.
- Fig. 7: zeigt in schematischer Form mögliche Zwischenstationen, die bei einer Ausführungsform des erfindungsgemäßen Verfahrens zum Herstellen einer faserbasierten Materialzusammensetzung erreicht werden können.

### DETAILBESCHREIBUNG DER AUSFÜHRUNGSFORMEN

Nachfolgend werden Ausführungsformen der vorliegenden Erfindung beschrieben. Sämtliche Ausführungsformen der Erfindung und auch ihre technischen Merkmale und Eigenschaften können einzeln isoliert oder wahlfrei zusammengestellt miteinander beliebig und ohne Einschränkung kombiniert werden.

Strukturell und/oder funktionell gleiche, ähnliche oder gleich wirkende Merkmale oder Elemente werden nachfolgend im Zusammenhang mit den Figuren mit denselben Bezugszeichen bezeichnet. Nicht in jedem Fall wird eine detaillierte Beschreibung dieser Merkmale oder Elemente wiederholt.

Die Figuren beschreiben die Erfindung exemplarisch anhand von Ausführungsbeispielen und in schematischer Art und Weise und sind nicht maßstabsgetreu, solange nichts anderes gesagt ist.

Zunächst wird auf die Zeichnungen im Allgemeinen Bezug genommen.

Die vorliegende Erfindung betrifft auch die Herstellung einer so genannten getrockneten Nassmasse 110 für C/SiC-Materialien und eine derartige getrocknete Nassmasse 110 selbst.

Bei der Herstellung von Werkstücken 150 und Werkzeugen 150, zum Beispiel Bremsscheiben, aus zum Beispiel C/SiC-Materialien kann eine feuchte und damit klebrige Pressmasse 100 verwendet werden, die sämtliche für die Bremsscheiben notwendigen Inhaltsstoffe aufweist. Die Befüllung von Formen 50 mit einer derartig feuchten klebrigen Nassmasse 100 ist sehr zeitaufwendig und erfolgt zum Beispiel von Hand.

Wünschenswert wäre ein automatisches Befüllen, jedoch können automatische Befüllsysteme, obwohl sie prinzipiell einsetzbar sind, ein Verkleben der entsprechenden Werkzeuge mit der feuchten Masse beim Abwiegen, Portionieren, Dosieren und Einbringen in die Formen, zum Beispiel durch Anklebungen an den Wänden oder ein Verkleben von Massebereichen untereinander nicht verhindern. Dies ist sehr problematisch.

Andererseits ist die Verwendung von reinen Trockenmassen, zum Beispiel unter Einbringung von Trockenharz oder Trockenharzen, aufgrund der starken Staubentwicklung, Staubbildung und der Gefahr der Entmischung der Mischungskomponenten ebenfalls problematisch. Gerade ein Entmischen im Hinblick auf andere Werkstoffverhaltensmuster im C/SiC-Material ist nicht tolerierbar, da dies häufig mit abgesenkten niedrigeren Festigkeiten und mit einem verschlechterten Dehnungsverhalten und/oder anderer Veränderungen einhergeht.

Es konnte gezeigt werden, dass durch ein erfindungsgemäß vorgesehenes Trocknen der feuchten Masse 100 oder feuchten Mischung 100 Probleme der verwendeten feuchten Masse 100 oder feuchten Mischung 100 sowie auf Probleme bei der Verwendung von Trockenharzen gelöst werden können. Die Befüllzeiten können drastisch reduziert werden, häufig auf einen Anteil von 10 % bis 15 %, zum Beispiel von 30 Minuten auf 3 bis 4 Minuten, und zwar selbst dann, wenn auch noch Kerne in die Masse 100 während des Befüllens der Pressform eingelegt werden. Solche Kerne dienen dazu, während des Pressvorgangs an vorher festgelegten Stellen des Presskörpers beim Pressen durch die sie umfließende Masse 100 fixiert zu werden, in einem weiteren Bearbeitungsschritt werden sie nach dem Härten des Presskörpers aus diesem mechanisch entfernt, oder chemisch zersetzt, beispielsweise während eines Carbonisierungsschritts (Erhitzen des Presskörpers in einer Umgebung, die weitgehend oder vollkommen frei von Sauerstoff ist, auf eine Temperatur von 750 °C bis 1300 °C, wobei die organischen Bestandteile der durch Verpressen und Erwärmen gehärteten Masse des Presskörpers zu einem wesentlichen Anteil in Kohlenstoff umgewandelt werden).

Durch geeignete Trocknungsbedingungen zu hohen Temperaturen hin können zudem überraschenderweise die Festigkeiten der Materialzusammensetzung 1 oder eines daraus hergestellten Vorkörpers 1' positiv beeinflusst, d.h. zum Beispiel gesteigert werden. Auch findet bei der Verwendung einer getrockneten Nassmasse 110 kein Austreten von Harz aus der Pressform beim Formgebungsschritt, d.h. beim Verpressen statt.

Durch den Übergang von der feuchten Mischung 100 oder Masse 100 zur getrockneten Mischung 110 oder Masse 110 werden gegebenenfalls vorgesehene Füllstoffe 30 am Material angebunden, ein Stauben wird reduziert oder gar verhindert.

Weiterhin ist das vorgeschlagene Vorgehen auch für alle Kompositwerkstoffe anwendbar, zum Beispiel bei CFK-Materialien, CFC-Materialien und deren Derivaten und Abwandlungen, gegebenenfalls mit Kurzfaserverstärkung.

Des Weiteren können, beispielsweise durch Fügen einzelner Vorkörper im CFC-Zustand und gemeinsame Infiltration vorzugsweise mit einem carbidbildenden Element oder einer Mischung mehrerer solcher Elemente, komplexe Bauteile hergestellt werden, wobei sich insbesondere ein automatisches Befüllen der zugrunde liegenden Formen mit der Masse 110 anbietet.

Nun wird im Detail auf die Zeichnungen Bezug genommen.

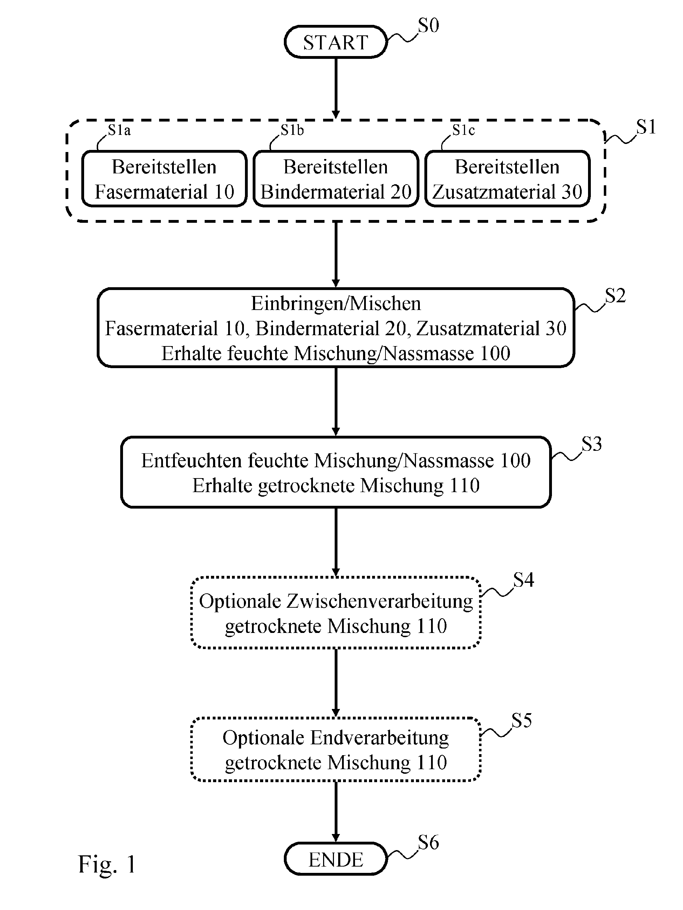

Fig. 1 zeigt in Form eines schematischen Flussdiagramms eine mögliche Ausführungsform des erfindungsgemäßen Verfahrens zum Herstellen einer faserbasierten Materialzusammensetzung 1 zum Verpressen oder dessen Vorform 1'.

Nach einem einleitenden und vorbereitenden Schritt S0 werden in einem ersten Schritt S1 des Bereitstellens im Teilschritt S1a ein oder mehrere Fasermaterialien 10 mit Fasern 10', in einem zweiten Teilschritt S1b ein oder mehrere Bindermaterialien 20, zum Beispiel in Form ein oder mehrerer Harzmaterialien, vorzugsweise Nassharze, und in einem dritten Teilschritt S1c ein oder mehrere Zusatzmaterialien 30, zum Beispiel Füllstoffe oder dergleichen, bereitgestellt. Die Teilschritte S1a, S1b, S1c können parallel oder sequentiell durchlaufen werden.

Die bereitgestellten Materialien 10, 20, 30 werden dann in einem nachfolgenden Schritt S2 des Mischens miteinander gemischt. Als Ergebnis erhält man eine feuchte Mischung 100 oder Masse 100.

Es schließt sich dann ein Schritt S3 des teilweisen oder vollständigen Entfeuchtens der feuchten Mischung 100 oder Masse 100 an. Als Ergebnis erhält man dann eine teilweise oder vollständig entfeuchtete oder getrocknete Mischung 110 oder Masse 110.

Diese kann dann grundsätzlich als erfindungsgemäße faserbasierte Materialzusammensetzung zum Verpressen aufgefasst werden oder als ein durch Pressen oder eine andere Formgebung daraus hergestellter Vorkörper 1', wenn weitere Zwischen- oder Nachverarbeitungsschritte folgen.

Es können sich nämlich optional ein Zwischenverarbeitungsschritt S4 und/oder ein Endverarbeitungsschritt S5 anschließen.

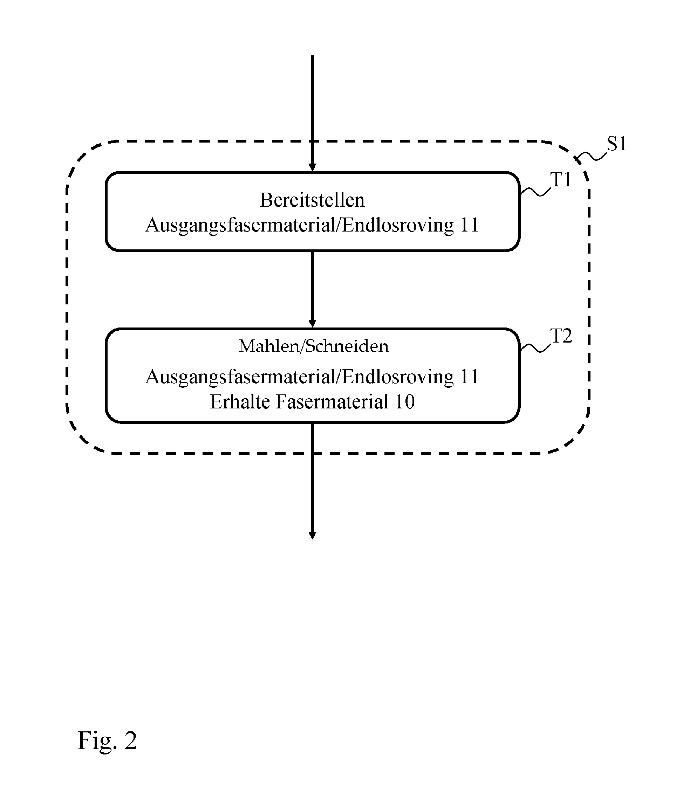

In Fig. 2 ist nach Art eines Teilflussdiagramms eine mögliche Ausführungsform des Teilschritts S1a des Bereitstellens der einen oder mehreren Fasermaterialien 10 mit den Fasern 10' dargestellt. Gemäß einem ersten Teilschritt T1 wird dabei zunächst ein zu Grunde liegendes oder Ausgangsfasermaterial 11 bereitgestellt, dies können Endlosrovings, Gewebe oder auch Abfälle aus Faserproduktionen sein. In einem nachfolgenden zweiten Teilschritt S2 werden das oder die bereitgestellten Ausgangsfasermaterialien 11 zerkleinert und somit in Faserabschnitte 10' oder Filamentabschnitte 10' zerlegt, zum Beispiel durch Mahlen und/oder Schneiden. Es werden das oder die zur Herstellung der Materialzusammensetzung 1 oder deren Vorform 1' nötigen Fasermaterialien 10 erhalten.

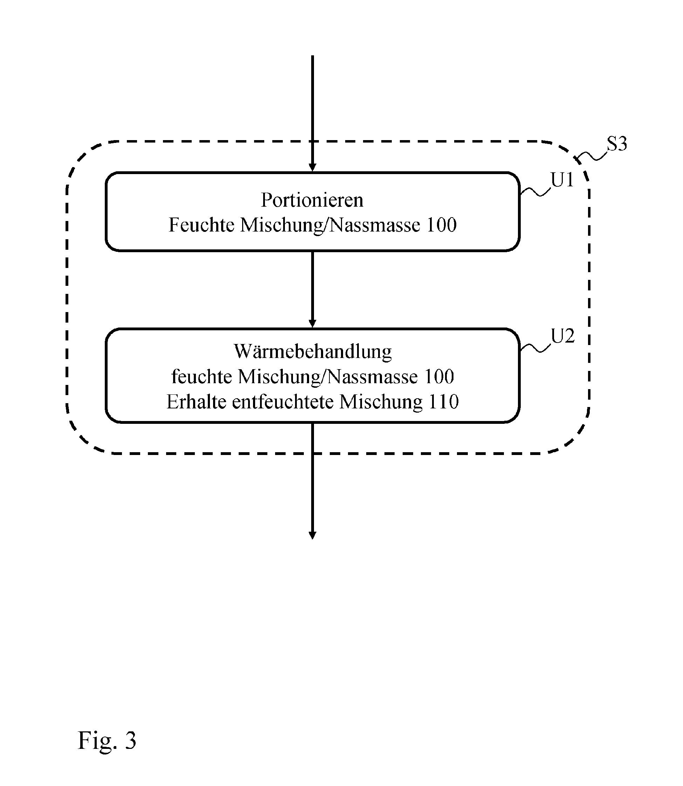

In Fig. 3 ist ebenfalls in schematischer Art und Weise in Form eines Teilflussdiagramms ein möglicher Schritt S3 des teilweisen oder vollständigen Entfeuchtens im Detail dargestellt, wobei hier in einem ersten Teilschritt U1 die zu Grunde liegende feuchte Mischung 100 oder Nassmasse 100 in Portionen zerkleinert und unterteilt wird. Die unterteilte oder zerkleinerte feuchte Mischung 100 oder Nassmasse 100 wird dann wärmebehandelt, zum Beispiel durch beaufschlagen mit Wärmemenge, insbesondere durch Aussetzen in einem Luftstrom, zum Beispiel in einem Trockenschrank bei einer Temperatur von 80 °C bis 90 °C. Die Portionierung steigert die Angriffsfläche zur schnelleren Trocknung, die getrockneten Portionen können zur Lagerung zusammengeführt oder gleich weiter verarbeitet werden. Es wird die teilweise oder vollständig entfeuchtete oder getrocknete Mischung 110 oder Nassmasse 110 erhalten.

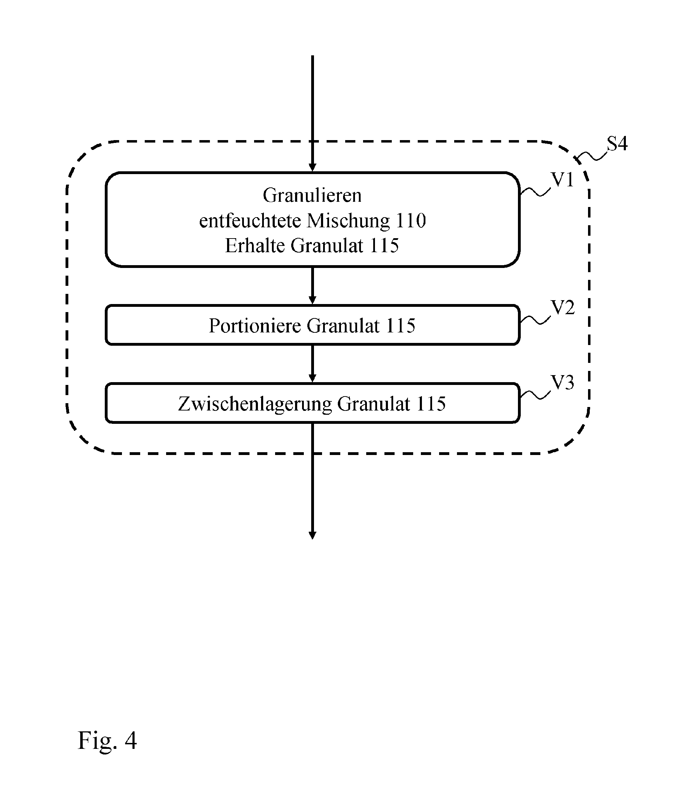

Fig. 4 zeigt ebenfalls nach Art eines Teilflussdiagramms ein mögliches Vorgehen bei der optionalen Zwischenverarbeitung S4, wobei dort die zu Grunde liegende getrocknete Mischung 110 oder Masse 110 in einem ersten Teilschritt V1 zu einem Granulat 115 granuliert und dann in einem zweiten Teilschritt V2 portioniert, wobei sich dann eine Zwischenlagerung V3 oder auch die Weiterverarbeiten gemäß dem Schritt S4 anschließen kann.

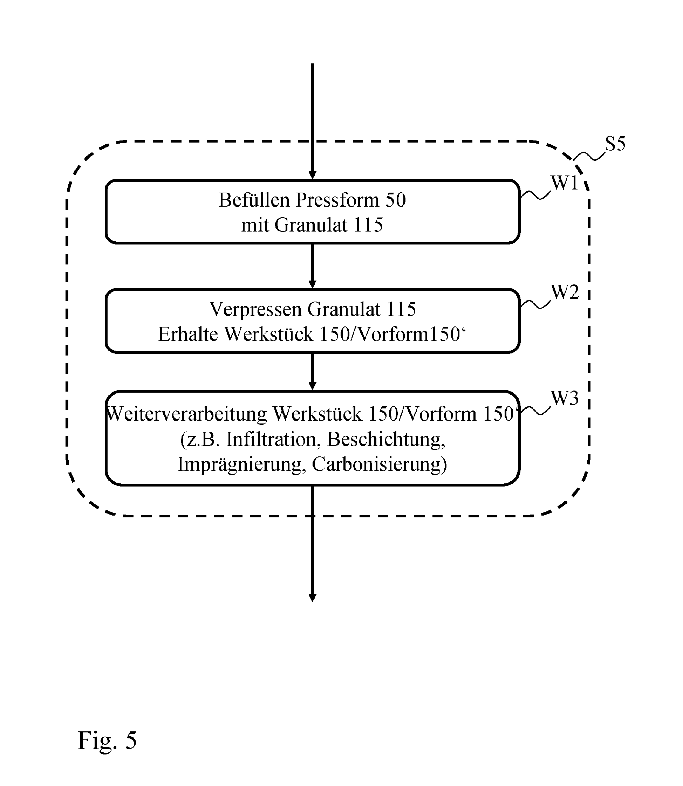

Fig. 5 zeigt nach Art eines Teilflussdiagramms eine Möglichkeit des Ausführens des Weiterverarbeitens S5, wobei zunächst eine zu Grunde liegende Pressform 50 in einem ersten Teilschritt W1 befüllt wird. Nach dem Befüllen schließt sich dann ein Teilschritt W2 des Verpressens an, wobei dann ein Werkstück 150 oder ein Vorkörper 150' für ein Werkstück 150 erhalten wird.

Das aus dem Schritt W2 entspringende Werkstück 150 oder dessen Vorkörper 150' können dann einer Weiterverarbeitung W3 unterzogen werden, zum Beispiel einem Infiltrieren, zum Beispiel mit geschmolzenem Pech oder mit geschmolzenem Silicium, einer Oberflächenbehandlung, zum Beispiel durch Beschichten und/oder Imprägnieren, einem Tempern und/oder einem Carbonisieren.

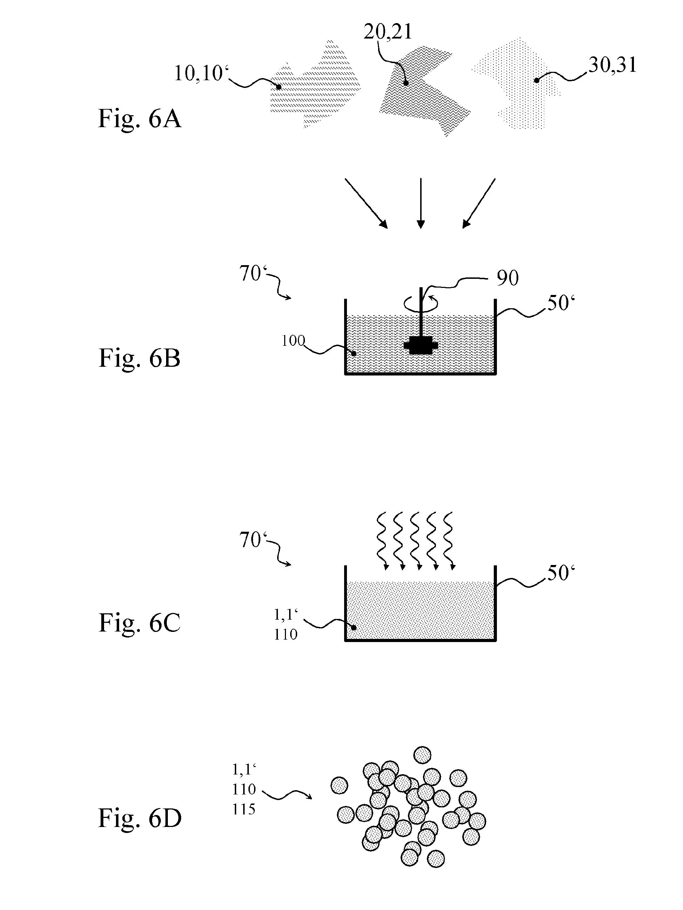

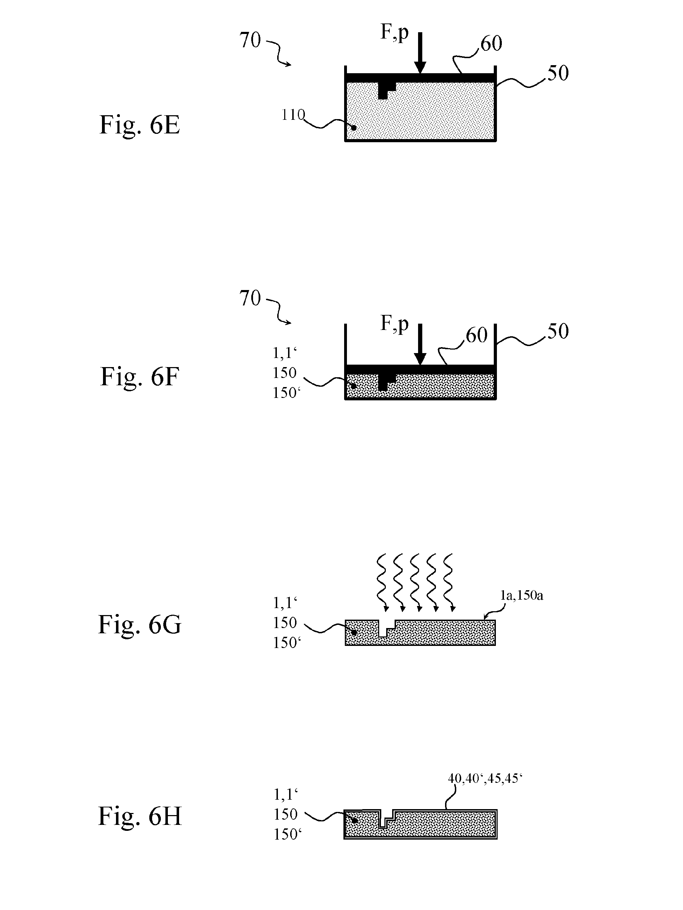

Die Fig. 6A bis 6H zeigen in schematischer und geschnittener Seitenansicht Zwischenstufen, die bei einer Ausführungsform des erfindungsgemäßen Verfahrens zum Herstellen einer faserbasierten Materialzusammensetzung 1 oder daraus hergestellte Vorkörper 1' erreicht werden können.

Gemäß Fig. 6A werden zunächst ein oder mehrere Fasermaterialien 10 mit Faser 10', ein oder mehrere Bindermaterialien 20 und/oder ein oder mehrere Zusatzmaterialien 30 - jeweils gegebenfalls mit einem Feuchtigkeitsanteil 21, 31 - bereitgestellt und in einer Mischeinrichtung 70' mit einem Gefäß 50' oder Mischgefäß 50' zusammengebracht und unter Mischen mittels eines Mischers 90 zur feuchten Masse 100 oder Mischung 100 oder Nassmasse 100 gemäß Fig. 6B verarbeitet.

Im Übergang zu dem in Fig. 6C gezeigten Zwischenzustand erfolgt dann eine Behandlung zur teilweisen oder vollständigen Entfeuchtung, hier mittels Wärmestrahlung, und zwar hier innerhalb des Gefäßes 50' der Mischeinrichtung 70'. Es ergibt sich eine teilweise oder vollständig entfeuchtete oder getrocknete Mischung 110 oder Masse 110, die auch als getrocknete Nassmasse 110 bezeichnet werden kann und die als erfindungsgemäß hergestellte faserbasierte Materialzusammensetzung 1 oder als ein daraus hergestellter Vorkörper 1' fungieren kann.

Im Übergang zu dem in Fig. 6D gezeigten Zwischenzustand wird die getrocknete Mischung 110 zu einem Granulat 115 granuliert, und zwar derart, dass jedes einzelne Korn 115' des Granulats 115 vollständig oder im Wesentlichen vollständig die Eigenschaften der getrockneten Mischung 110 in homogener Weise repräsentiert.

Nach einem gegebenenfalls vorgesehenen Zwischenlagerungsschritt wird dann die getrocknete Mischung 110 oder getrocknete Nassmasse 110 - zum Beispiel in Form des Granulats 115 aus den Körnern 115' - in eine Pressform 50 oder ein Pressgefäß 50 einer Presseinrichtung 70 eingebracht.

Gemäß Fig. 6E wird das Gefäß mit einem Stempel 60 verschlossen.

Im Übergang zu dem in Fig. 6F gezeigten Zwischenzustand wird über die auf den Stempel 60 applizierte Kraft F ein Druck p auf die im Inneren 50i des Gefäßes 50 vorgesehene getrocknete Mischung 110 ausgeübt, wodurch diese komprimiert wird und sich dabei ein Werkstück 150 oder dessen Vorkörper 150' ergibt.

Im Übergang zu dem in Fig. 6G gezeigten Zwischenzustand wird das Werkstück 150 oder dessen Vorkörper 150' aus dem Gefäß 50 entnommen und einer Wärmebehandlung, zum Beispiel einem Tempern und/oder einem Carbonisierungsvorgang unterzogen.

Alternativ oder zusätzlich wird im Schritt 6H die Oberfläche 150 des Werkstücks 150 oder Werkzeugs 150 oder dessen Vorkörper 150' mit einem Imprägniermaterial 30' imprägniert oder mit einem Beschichtungsmaterial 40' beschichtet, so dass eine Beschichtung 30 oder eine Imprägnierung 40 auf der Oberfläche 150a, 1a ausgebildet wird.

### BEZUGSZEICHENLISTE

- 1: erfindungsgemäße Materialzusammensetzung
- 1': Vorkörper hergestellt aus der erfindungsgemäßen Materialzusammensetzung 1
- 1a: Oberfläche, Oberflächenbereich
- 10: Fasermaterial
- 10': Fasern
- 11: Ausgangsfasermaterial, Endlosroving
- 20: Bindermaterial
- 21: Feuchtigkeitsanteil, flüssige, pastöse und/oder gelartige Komponente
- 30: Zusatzmaterial, Zusatzstoff, Füllstoff
- 31: Feuchtigkeitsanteil, flüssige, pastöse und/oder gelartige Komponente
- 40: Beschichtung
- 40': Beschichtungsmaterial
- 45: Imprägnierung
- 45': Imprägniermaterial
- 50: Pressgefäß, Pressform
- 50i: Inneres des Pressgefäßes 50
- 50': Mischgefäß
- 60: Stempel
- 70: Presseinrichtung
- 70': Mischeinrichtung
- 90: Mischer, Rühreinrichtung
- 100: feuchte Mischung, feuchte Masse, Nassmasse
- 110: teilweise oder vollständig entfeuchtete oder getrocknete Mischung oder Masse
- 115: Granulat
- 115': Korn des Granulats 115
- 150: Werkstück, Werkzeug
- 150a: Oberfläche
- 150': Vorkörper des Werkstücks 150 oder des Werkzeugs 150

## Patentansprüche

1. Verfahren zum Herstellen einer faserbasierten Materialzusammensetzung (1) zum Verpressen oder ein daraus hergestellter Vorkörper (1'),
mit den Schritten:
(S1) Bereitstellen eines oder mehrerer Fasermaterialien (10) mit oder aus Fasern (10') oder Abschnitten von Fasern (10'), eines oder mehrerer Bindermaterialien (20) und/oder insbesondere eines oder mehrerer Zusatzmaterialien (30), wobei das oder die Bindermaterialien (20) und/oder das oder die Zusatzmaterialien (30) einen Feuchtigkeitsanteil in Form einer flüssigen, pastösen und/oder gelartigen Komponente (21, 31) aufweisen,
(S2) Mischen des oder der Fasermaterialien (10), des oder der Bindermaterialien (20) und insbesondere des oder der Zusatzmaterialien (30) miteinander und Erhalten einer einen Feuchtigkeitsanteil enthaltenden feuchten Mischung (100) und
(S3) teilweises oder vollständiges Entfeuchten der feuchten Mischung (100) und dadurch erhalten einer teilweise oder vollständig entfeuchteten oder getrockneten Mischung (110) als die Materialzusammensetzung (1) zum Verpressen oder als ein daraus hergestellter Vorkörper (1').

2. Verfahren nach Anspruch 1,
bei welchem der Schritt (S3) des teilweisen oder vollständigen Entfeuchtens einen Schritt des Erwärmens aufweist,
insbesondere mittels Wärmestrahlung und/oder mittels Konvektion,
insbesondere mittels eines Stroms erwärmter Luft und/oder eines erwärmten Gases, vorzugsweise eines erwärmten Inertgases.

3. Verfahren nach einem der vorangehenden Ansprüche,
bei welchem der Schritt (S3) des teilweisen oder vollständigen Entfeuchtens einen Schritt aufweist des Absenkens des Umgebungsdrucks,
insbesondere des Evakuierens, vorzugsweise unterhalb eines Enddrucks von etwa 1 hPa.

4. Verfahren nach einem der vorangehenden Ansprüche,
bei welchem die feuchte Mischung (100) vor dem und/oder während des teilweisen oder vollständigen Entfeuchtens (S3) zerkleinert wird.

5. Verfahren nach einem der vorangehenden Ansprüche,
bei welchem die getrocknete Mischung (110) zerkleinert wird,
insbesondere durch Granulieren und/oder zu einer mittleren Korngröße hin im Bereich von etwa 0,5 mm bis etwa 10 mm, vorzugsweise im Bereich von etwa 2 mm bis etwa 4 mm.

6. Verfahren nach einem der vorangehenden Ansprüche,
wobei das oder die Fasermaterialien (10) mit oder aus Kohlenstofffasern, Glasfasern, Aramidfasern und/oder deren Abschnitten oder Kombinationen gebildet ist oder wird,
insbesondere durch Mahlen und/oder Schneiden mit einer Faserlänge oder einer Faserabschnittslänge im Bereich von etwa 0,1 mm bis etwa 20 mm.

7. Verfahren nach einem der vorangehenden Ansprüche,
wobei das oder die Bindermaterialien (20) mit oder aus einem oder mehreren Harzmaterialien, insbesondere einem Nassharz, einem Harz auf Wasserbasis und/oder Basis eines organischen Lösungsmittels, ein Harzpulver, organischen Harzen, Harzmaterialien, organischen Bindern, Polysilazanen, Polysilanen, Polycarbosilanen, Polysiloxanen, Kombinationen und Mischungen dieser Polymere, Kombinationen und Mischungen dieser Polymere mit organischen Harzen, organischen Harzmaterialien und organischen Bindern oder einer Kombination davon ausgebildet sind oder werden.

8. Verfahren nach einem der vorangehenden Ansprüche,
wobei das oder die Zusatzmaterialien (30) ein oder mehrere Füllstoffe, insbesondere ein Siliciumcarbidmaterial, ein C/SiC-Material und/oder Feuchtigkeitsanteile liefernde Zusätze, insbesondere Wasser und/oder organische Lösungsmittel, oder deren Kombinationen aufweisen.

9. Verfahren nach einem der vorangehenden Ansprüche,
bei welchem die feuchte oder die getrocknete Mischung (100, 110) durch Weiterverarbeitungsschritte nach Art eines C/SiC-Materials, nach Art eines CFK-Materials und/oder nach Art eines CFC-Materials ausgebildet wird.

10. Verfahren nach einem der vorangehenden Ansprüche,
bei welchem die getrocknete Mischung (110) - insbesondere in granulierter Form - in eine Pressform (60) eingefüllt unter Druck zu einem Werkzeug (150) oder einen Vorkörper (150') dafür verpresst wird.

11. Faserbasierte Materialzusammensetzung (1) oder ein daraus hergestellter Vorkörper (1'),
welche nach einem Herstellungsverfahren nach einem der Ansprüche 1 bis 9 hergestellt ist oder wurde.

12. Werkzeug (150) oder ein Vorkörper (150') dafür,
welches nach einem Verfahren gemäß einem der Ansprüche 1 bis 9 und/oder auf der Grundlage einer faserbasierten Materialzusammensetzung (1) oder eines daraus hergestellten Vorkörpers (1') nach einem der Ansprüche 1 bis 9 hergestellt wurde.

13. Werkstück, Werkzeug (150) oder ein Vorkörper (150') dafür,
welches oder welche als Bremsscheibe für ein Fahrzeug oder eine Maschine mit einem oder mehreren um eine Achse rotierenden Teilen ausgebildet ist.
